# EUROPÄISCHE PATENTANMELDUNG

(11) **EP 3 141 127 A1**
(43) Veröffentlichungstag der Anmeldung: **15.03.2017**
(21) Anmeldenummer: 16179923.4
(22) Anmeldetag: 18.07.2016
(51) Int. Cl.: A21C 15/00, A21D 15/02, A23L 5/10

(54) **VERFAHREN ZUM BEHANDELN VON FEUCHTIGKEIT ENTHALTENDEN BACKERZEUGNISSEN SOWIE ABKÜHLANLAGE ZUR DURCHFÜHRUNG DES VERFAHRENS**

(30) Priorität: 12.08.2015 CH 11582015
(71) Anmelder: Aston Foods AG, 6300 Zug/Steinhausen (CH)
(72) Erfinder: VETTERLI, Christian, 8330 Pfäffikon (CH); RUTZ, Alexander, 8001 Zürich (CH)
(74) Vertreter: Rentsch Partner AG

(57) **Zusammenfassung**

Die Erfindung betrifft ein Verfahren zum Behandeln von Feuchtigkeit enthaltenden Backerzeugnissen (13), bei dem die zu behandelnden Backerzeugnisse (13) in eine Vakuumkammer (11) eingebracht werden, dann die Backerzeugnisse durch Abpumpen der Vakuumkammer (11) mittels einer Vakuumpumpe (16) entlang einer vorbestimmten Abpumpkurve abgekühlt werden, und anschliessend durch Einführen ausgewählter Gase (G1, G2, G3) in die Vakuumkammer (11) ein Druckausgleich in der Vakuumkammer (11) entlang einer vorbestimmten Druckausgleichskurve vorgenommen wird.

Eine wesentlich höhere Prozessflexibilität bei gleichzeitiger apparativer Vereinfachung wird dadurch erreicht, dass zum Druckausgleich eine Mischung mehrerer verschiedener Gase (G1, G2, G3) eingesetzt wird.

## Beschreibung

### TECHNISCHES GEBIET

Die vorliegende Erfindung bezieht sich auf das Gebiet der Lebensmitteltechnologie. Sie betrifft ein Verfahren zum Behandeln von Feuchtigkeit enthaltenden Backerzeugnissen gemäss dem Oberbegriff des Anspruchs 1.

Sie betrifft weiterhin eine Abkühlanlage zur Durchführung des Verfahrens.

### STAND DER TECHNIK

Die Abkühlung von gebackenen oder vorgebackenen Backwaren in einer Vakuumkammer durch verdampfendes Absaugen der in den Backwaren enthaltenen Feuchtigkeit ist in der Backtechnologie seit langem bekannt.

Unter Backwaren sollen dabei im weiteren Sinne Gebäckprodukte verschiedenster Art verstanden werden, z.B. Brot, Brötchen, sonstiges Kleingebäck, Pizza und Kuchen, die wesentliche Eigenschaften durch eine thermische Behandlung (Backen) bekommen. Eingeschlossen sind aber auch Produkte, die als tiefgefrorene Teiglinge aufgetaut und gebacken werden und Produkte, die zunächst zu einem bestimmten Prozentsatz vorgebakken und dann, beispielsweise in Verkaufsfilialen oder auch von Endkunden, fertig gebakken werden.

An solche Backwaren werden verschiedene Anforderungen gestellt. Beispielsweise soll das in den Verkaufsfilialen angebotene Brot frisch sein und eine knusprige Kruste aufweisen. Außerdem sollte das Brot auch auf Kundenwunsch schnittfähig sein, um unmittelbar vor dem Verkauf im Beisein des Kunden geschnitten zu werden.

Beim auf das Backen folgenden Kühlprozess werden dem Backprodukt einige Prozent des Gesamtgewichtes an Produktfeuchte entzogen. Dieser Feuchtigkeitsentzug kann durch entsprechende Prozessanpassung des Backprozesses, beispielsweise durch kürzere Backzeiten, kompensiert werden, was jedoch häufig Nachteile anderer Art nach sich zieht. So kann es z.B. passieren, dass durch verkürzte Backzeiten auch die Bildung vor allem von Röstaromen in der Kruste reduziert wird. Diese Aromen entstehen aufgrund der bekannten Maillard-Reaktion, einer nichtenzymatischen Bräunungsreaktion, die für das typische Aroma und die Färbung von eiweißreichem Gerösteten, Gebackenen und Gebratenen verantwortlich erst, in den letzten Minuten einer Backphase.

Es sind daher bereits Vorschläge gemacht worden, die beim Abkühlen verloren gegangene Feuchtigkeit den Backwaren wieder gezielt zuzuführen, was allerdings Schwierigkeiten bereitet.

So heisst es in einem Fachbuch (Lösche, K. (2003). Kältetechnologie in der Bäckerei. Behr's Verlag, Hamburg.): "Die Rückführung von Wasser war erstmals Patentbestandteil 1970 und diente ursprünglich zum Anfeuchten der Kruste, um sie für das nachgeschaltete maschinelle Schneiden aufzubereiten. Das Einbringen von Wasser gestaltet sich schwierig, wenn man die Bedingungen bei der Vakuumkühlung beachtet. Ein Kubikmeter Luft kann bei 22°C maximal ca. 20 g Wasserdampf aufnehmen. In einem Brötchen sind maximal ca. 0,0002 m³ Luft eingeschlossen. Das bedeutet, dass höchstens 0,004 g Wasserdampf während des Druckausgleichs der Vakuumkammer in das Brötchen wieder eingebracht werden könnten. Die dadurch erreichte Gewichtszunahme ist praktisch vernachlässigbar. Alles Übrige an Wasserdampf verbleibt an Oberflächen (Kruste), Blechen, Waagen und in Kammer aber nicht im Produkt."

Die Druckschrift EP 1 941 800 A2 beschreibt ein Verfahren zur Herstellung von Back-Vorprodukten, wie grünen, teilgegarten, zumindest halbgebackenen oder vollgegarten Teiglingen, indem die in einem klimatisierten Warenraum eingebrachten Back-Vorprodukte befeuchtet werden, dergestalt, dass dem Luftstrom der Kälteerzeugungseinrichtung ein Aerosol mit definierter Tröpfchengrösse zugegeben wird, so dass der mit dem Aerosol versetzte Luftstrom das jeweilige Back-Vorprodukt im Wesentlichen vollständig umströmt und das Aerosol in die Oberfläche des jeweiligen Back-Vorproduktes dergestalt eindringt, dass sich eine im Wesentlichen homogene Durchfeuchtung des jeweiligen Back-Vorproduktes einstellt.

Die Druckschrift WO 2010/012421 A1 beschreibt ein Verfahren zur Herstellung von Backwaren und/oder Frittierprodukten. Die Druckschrift geht davon aus, dass die Qualität von Backwaren, teilweise aber auch von Frittierwaren, insbesondere bei Kleinbackwaren, wie Brötchen, vorwiegend durch ihre Knusprigkeit bestimmt wird. Dabei stellt es in der Regel ein großes Problem dar, die gewünschte knusprige, mürb-sprödige Gebäckkruste über längere Zeit aufrecht zu erhalten. In der Regel hält die sogenannte Krustenrösche maximal 4 - 5 Stunden an, danach verliert sie sich, die Gebäckoberfläche, d.h. die Kruste wird weich, bis das gesamte Brötchen pappig wird und in sich zusammenfällt, bevor es schließlich austrocknet.

Zur Lösung der gestellten Aufgabe schlägt die Druckschrift vor, dass während der gesamten Teigver- und -bearbeitung eine relative Luftfeuchtigkeit mindestens in der Nähe der relativen Luftfeuchtigkeit der jeweiligen Backwaren und/oder des jeweiligen Frittierprodukts eingehalten und die fertig gebackene heiße Backware einem Vakuumkühlverfahren bei einem Druck von ca. 20 mbar - 180 mbar für ca. 5 min. unterzogen wird. Insbesondere wird eine Vakuum-Enthalpie-Kühlung bevorzugt, bei der minimal 20 mbar und maximal 180 mbar eingehalten werden. Bei dieser nutzt man die Verdampfungsenthalpie von Wasser im Vakuum aus. Durch die Verringerung des absoluten Drucks in einem Vakuumkörper beginnt das Wasser bei entsprechend tieferen Temperaturen zu verdampfen und entzieht somit dem wasserhaltigen Produkt Energie und kühlt es somit schnell ab. Schnelle Moleküle verdampfen, langsame Moleküle verbleiben. Neben dem schnellen Herabkühlen auf z.B. 4° Celsius Lagertemperatur wird die Lagerdauer von Lebensmitteln entsprechend verlängert, ohne diese einfrieren zu müssen.

Die Druckschrift WO 2011/063841 A1 beschreibt ein Verfahren zur Herstellung von Backwaren mit folgenden Verfahrensschritten, bei dem a) das Backgut in den Backraum bei Umgebungsdruck eingebracht wird, b) der Backraum anschließend vakuumdicht verschlossen und evakuiert wird, c) der Backraum indirekt beheizt wird, d) der Backraum zusätzlich direkt mit Kaltdampf beaufschlagt wird, e) der Backraum zusätzlich direkt mit Heißdampf beaufschlagt wird, f) der Backraum erneut evakuiert und dadurch gekühlt wird und g) der Backraum abschließend belüftet wird.

Die Druckschrift WO 2012/082060 A1 betrifft eine Anordnung und ein Verfahren zur Kühlung von frisch gebackenem Brot unter einem negativen Druck, wobei die Anordnung eine Vakuumkammer, die zur Aufnahme frisch gebackenem Brot zur Kühlung desselben angepasst ist, umfasst, sowie eine Vakuumquelle, beispielsweise eine Vakuumpumpe, die mit der Vakuumkammer zum Absaugen eines Fluids aus der Vakuumkammer und Erzeugen eines Unterdrucks darin verbunden ist. Die Anordnung umfasst auch einen Dampfgenerator zur Erzeugung von Wasserdampf bei einem Unterdruck, wobei der Dampf im wesentlichen frei von Luft ist, und wobei der Dampfgenerator mit der Vakuumkammer verbunden ist, so dass Dampf erzeugt wird, der in die Kammer im wesentlichen ohne gleichzeitige Einführung von Luft eingebracht werden kann.

Wenn bei diesem Verfahren die Kerntemperatur des Brotes unter einen bestimmten Schwellenwert sinkt, oder wenn die Brotprodukte eine vorbestimmte Zeit lang abgekühlt wurden, wird über eine separate Zuleitung Dampf in die Vakuumkammer eingebracht. Der Vakuumkühlprozess wird dann durch die Einführung von Frischluft in die Vakuumkammer über eine andere separate Zuleitung abgeschlossen.

Hierdurch ergibt sich auf der einen Seite eine vergleichsweise aufwändige Vakuumkammer mit mehreren verschiedenen Zuleitungen. Auf der anderen Seite sind die Möglichkeiten der Prozessführung beim Abkühlen sehr beschränkt.

### DARSTELLUNG DER ERFINDUNG

Es ist daher eine Aufgabe der Erfindung, ein Verfahren der eingangs genannten Art anzugeben, welches eine erhöhte Flexibilität aufweist.

Es ist auch eine Aufgabe der Erfindung, eine Abkühlanlage zur Durchführung des Verfahrens bereitzustellen, die sich durch eine vereinfachte Vakuumkammer auszeichnet.

Diese Aufgaben werden durch die Merkmale der Ansprüche 1 und 9 gelöst.

Das erfindungsgemässe Verfahren zum Behandeln von Feuchtigkeit enthaltenden Backerzeugnissen umfasst die folgenden Schritte:
a) Einbringen der zu behandelnden Backerzeugnisse in eine Vakuumkammer;
b) Abkühlen der Backerzeugnisse durch Abpumpen der Vakuumkammer mittels einer Vakuumpumpe entlang einer vorbestimmten Abpumpkurve; und
c) anschliessender Druckausgleich in der Vakuumkammer entlang einer vorbestimmten Druckausgleichskurve durch Einführen ausgewählter Gase in die Vakuumkammer;
dadurch gekennzeichnet, dass
d) zum Druckausgleich eine Mischung mehrerer verschiedener Gase eingesetzt wird.

Eine Ausgestaltung des Verfahrens nach der Erfindung ist dadurch gekennzeichnet, dass die Mischung der Gase während des Druckausgleichs gezielt verändert wird.

Eine andere Ausgestaltung des Verfahrens nach der Erfindung ist dadurch gekennzeichnet, dass wenigstens drei unterschiedliche Gase für den Druckausgleich verwendet werden.

Eine wieder andere Ausgestaltung des Verfahrens nach der Erfindung ist dadurch gekennzeichnet, dass die Gase aus entsprechenden Gasquellen über eine gemeinsame Einlassleitung in die Vakuumkammer eingelassen werden.

Dabei kann die Gasmischung mittels einer Steuerung gesteuert werden, welche auf den Zustrom der Gase aus den entsprechenden Gasquellen in die gemeinsame Einlassleitung einwirkt.

Die Steuerung kann dabei über jeweils zwischen den Gasquellen und der gemeinsamen Einlassleitung angeordnete Ventile die Gasmischung steuern.

Die Gase können zumindest Wasserdampf, Luft und CO2 umfassen.

Weiterhin ist es denkbar, dass die Vakuumpumpe über eine Absaugleitung an die Vakuumkammer angeschlossen ist, und dass die Gasmischung aus der gemeinsamen Einlassleitung über die Absaugleitung in die Vakuumkammer eingelassen wird.

Die erfindungsgemässe Abkühlanlage zur Durchführung des Verfahrens nach der Erfindung umfasst eine Vakuumkammer mit einer daran angeschlossenen Vakuumpumpe sowie Mitteln zum Einlassen von verschiedenen Gasen zwecks Druckausgleich in die Vakuumkammer, wobei die Einlassmittel eine für die verschiedenen Gase gemeinsame Einlassleitung aufweisen.

Eine Ausgestaltung der erfindungsgemässen Abkühlanlage ist dadurch gekennzeichnet, dass für die verschiedenen Gase separate Gasquellen vorgesehen sind, die über von einer Steuerung gesteuerte Ventile an die gemeinsame Einlassleitung angeschlossen sind.

Dabei können wenigstens drei separate Gasquellen für Wasserdampf, Luft und CO2 vorgesehen sein.

Eine andere Ausgestaltung der erfindungsgemässen Abkühlanlage ist dadurch gekennzeichnet, dass die Vakuumpumpe über eine Absaugleitung und ein in der Absaugleitung angeordnetes, von einer Steuerung steuerbares Ventil an die Vakuumkammer angeschlossen ist, und dass die gemeinsame Einlassleitung zwischen dem Ventil und der Vakuumkammer in die Absaugleitung mündet.

Dabei kann zwischen dem steuerbaren Ventil und der Vakuumkammer ein Druckaufnehmer zur Messung und Überwachung des Druckes in der Vakuumkammer an der Absaugleitung angeordnet sein.

Es ist auch denkbar, dass die Gasquelle für Wasserdampf für die Erzeugung von Wasserdampf durch Verdampfen von Wasser ausgelegt ist.

Weiterhin ist es möglich, dass die Gasquelle für CO2 als Gasspeicher ausgebildet ist.

Auch ist es denkbar, dass die Gasquelle für Luft zur Ansaugung von Luft aus der Umgebung und Reinigung der angesaugten Luft ausgelegt ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer schematischen Darstellung eine Abkühlanlage gemäss einem Ausführungsbeispiel der Erfindung; und
- Fig. 2: eine beispielhafte Abkühlungs- und Druckausgleichskurve gemäss einem Verfahren nach der Erfindung.

### WEGE ZUR AUSFÜHRUNG DER ERFINDUNG

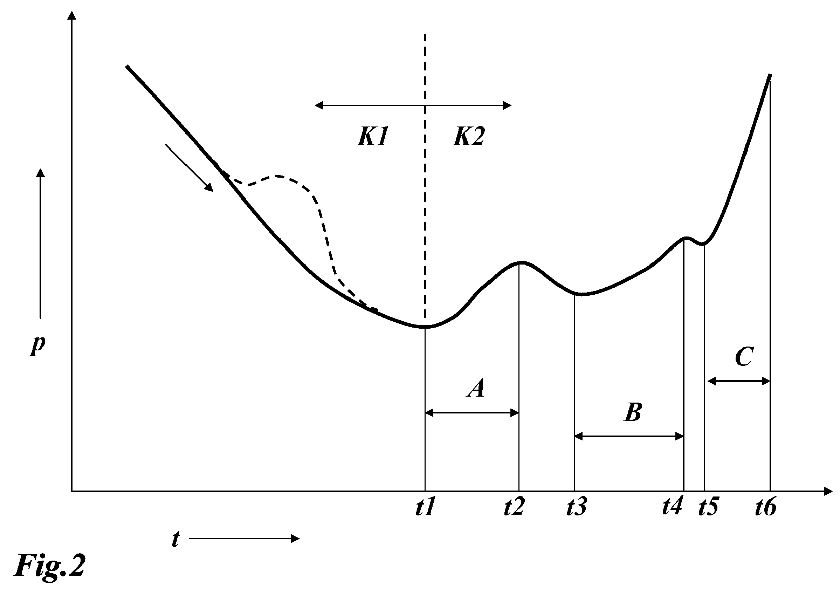

Die vorliegende Erfindung zielt nicht auf die Anreicherung der Backware mit feuchter Luft, da dies - wie eingangs erwähnt - wenig aussichtsreich erscheint. Vielmehr geht es zunächst darum, die Backware selbst, d.h. Krume und Kruste mit Wasser anzureichern. Die Wasseraufnahmefähigkeit von Stärke ist nämlich um ein Vielfaches höher als diejenige von Luft. Aus diesem Grund wird nicht befeuchtete Luft für den Druckausgleich (Rückbegasung) verwendet, sondern reiner Wasserdampf. Des weiteren wird darauf abgezielt, den Druckausgleich auch mit einer variablen Mischung verschiedener geeigneter Gase ablaufen zu lassen, um beispielsweise die Haltbarkeit beeinflussen zu können. Der Druckverlauf während des ganzen Druckausgleichs wird dabei in Echtzeit von einer Computersteuerung geregelt. Der Druckverlauf muss dabei nicht notwendigerweise stetig monoton steigend sein, sondern kann lokale Maxima, Minima und Wendepunkte aufweisen (siehe Fig. 2), falls das einen günstigen Einfluss auf die Backware hat.

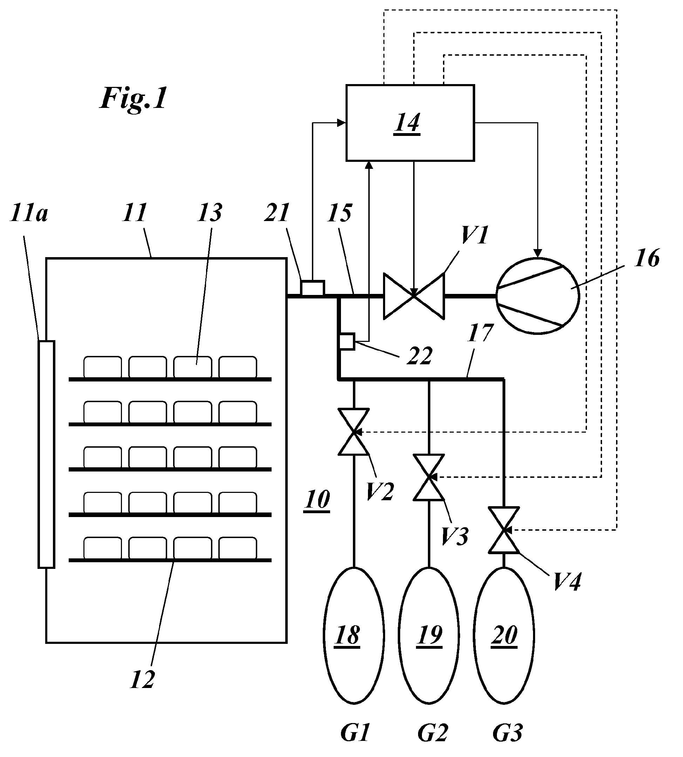

Fig. 1 zeigt in einer schematischen Darstellung eine dafür vorgesehene Abkühlanlage gemäss einem Ausführungsbeispiel der Erfindung. Die Abkühlanlage 10 der Fig. 1 umfasst als einen Hauptbestandteil eine Vakuumkammer 11, die durch eine Tür mit den abzukühlenden Backerzeugnissen 13 befüllt und auch wieder entleert werden kann. Die Backerzeugnisse oder Backwaren 13 sind in der Vakuumkammer 11 beispielsweise in mehreren Etagen übereinander auf Tragebenen 12 angeordnet, derart, dass die einzelnen Backerzeugnisse 13 mit ihren Oberflächen für ein Absaugen der Feuchtigkeit gut zugänglich sind.

An die Vakuumkammer 11 ist über eine Absaugleitung 15 eine Vakuumpumpe 16 angeschlossen, die in der Vakuumkammer 11 den notwendigen Unterdruck erzeugt, der zu einer Verdampfung der in den Backerzeugnissen 13 vorhandenen Feuchte und damit zu einer Abkühlung führt. In die Absaugleitung 15 ist ein steuerbares Ventil V1 eingefügt, mit dem die Vakuumpumpe 16 von der Vakuumkammer 11 getrennt, aber auch (bei teilweiser Öffnung) die Absaugleistung gesteuert werden kann. Zur gezielten Beeinflussung des Absaug- bzw. Abkühlvorgangs sind Ventil V1 und Vakuumpumpe 16 in diesem Beispiel mit einer zentralen Steuerung 14 verbunden. Der Druck in der Vakuumkammer 11 wird dabei von einem Druckaufnehmer 21 überwacht, der ebenfalls an die Steuerung 14 angeschlossen ist und im vorliegenden Fall an der Absaugleitung 15 in unmittelbarer Nähe des Eingangs zur Vakuumkammer 11 angeordnet ist. Durch diese Anordnung wird ein den Aufwand erhöhender zusätzlicher Zugang zur Vakuumkammer 11 für den Druckaufnehmer 21 vermieden.

Für einen Druckausgleich am Ende der Abkühlungsphase sind im Beispiel der Fig. 1 drei Gasquellen 18, 19 und 20 vorgesehen, aus denen jeweils ein Gas G1, G2 oder G3 einzeln oder in Mischung mit den anderen Gasen in die Vakuumkammer 11 eingelassen werden kann. Wenn Bedarf oder Notwendigkeit besteht, können auch weitere Gasquellen hinzugefügt werden, so dass insgesamt eine hochflexible Prozessführung beim Abkühlen der Backwaren möglich wird. Um auch hier zusätzliche Zugänge zur Vakuumkammer 11 zu vermeiden und gleichzeitig eine gute Durchmischung mehrerer gleichzeitig zugeführter Gase zu ermöglichen, sind die Gasquellen 18, 19 und 20 über zugeordnete steuerbare Ventile V2, V3 und V4, die ebenfalls mit der Steuerung 14 verbunden sind, an eine gemeinsame Einlassleitung 17 angeschlossen, die ihrerseits zwischen dem Ventil V1 und der Vakuumkammer 11 in die Absaugleitung 15 mündet.

Wenn nötig kann auch die Temperatur der zugeführten Gase überwacht werde. Dafür ist im Beispiel der Fig. 1 ein mit der Steuerung 14 verbundener Temperaturaufnehmer 22 an der Einlassleitung 17 vorgesehen. Ein solcher Temperaturaufnehmer kann aber auch an den einzelnen Zuleitungen zwischen einer Gasquelle 18, 19, 20 und der gemeinsamen Einlassleitung 17 angeordnet sein, wenn die Temperatur einzelner Gase G1, G2, G3 überwacht werden soll.

Im Beispiel der Fig. 1 sind drei separate Gasquellen 18, 19, 20 für Wasserdampf, Luft und CO2 vorgesehen. Die Gasquelle 18 für Wasserdampf kann dabei insbesondere für die Erzeugung von Wasserdampf durch Verdampfen von Wasser, z.B. mittels einer Heizung, ausgelegt sein. Die Gasquelle 19 für CO2 ist zweckmässigerweise als Gasspeicher ausgebildet, in welchem das CO2 bevorratet ist. Die Gasquelle 20 für Luft kann zweckmässigerweise zur Ansaugung von Luft aus der Umgebung ausgelegt sein, die bei Bedarf einer Filterung und/oder Reinigung unterzogen werden kann.

Für das mit der Anlage nach Fig. 1 durchführbare Verfahren ist in Fig. 2 eine beispielhafte Abkühlkurve wiedergegeben, die den Verlauf des Druckes p in der Vakuumkammer 11 in Abhängigkeit von der Zeit t zeigt und in zwei aneinander anschliessende Teilkurven K1 und K2 zerfällt. Die Teilkurve K1 ist die Abpumpkurve, während der der Druck in der Vakuumkammer 11 erniedrigt und damit die Abkühlung der Backwaren durchgeführt wird. Wird hier fortlaufend abgepumpt, ergibt sich der durchgezogene Kurvenverlauf. Während der Phase K1 muss der Druck aber nicht zwingend stetig fallen, sondern der Druckverlauf Kann (auch ohne Zuführung von externen Gasen) Wendepunkte aufweisen, indem das Ventil V1 ein oder mehrere Male für kurze Zeit nahezu oder vollständig geschlossen wird, um der Backware eine "Verschnaufpause" zu geben und so den mechanischen Stress zu reduzieren. Das Schliessen des Ventils V1 bewirkt einen Druckanstieg (gestrichelter Verlauf in K1 in Fig. 2), weil der Wasserdampf, der das die Backware (z.B. das Brot) verlässt, einen Ausgleich schafft und die Prozesse mit einer gewissen zeitlichen Verzögerung ablaufen, so dass auch kleine Druckanstiege zu beobachten sind, bevor das Ventil V1 wieder öffnet.

Die Teilkurve K2 ist die Druckausgleichskurve, die den Druckausgleich durch sukzessives Zuführen von Gasen und Gasmischungen beinhaltet.

Auf der Druckausgleichskurve K2 wird im Zeitabschnitt A zwischen den Zeitpunkten t1 und t2 ein Gas oder eine Gasmischung zugeführt, die den Druck in der Vakuumkammer 11 erhöhen und auf die Backwaren in vorbestimmter Weise einwirken. Wird die Gaszugabe zum Zeitpunkt t2 unterbrochen, bleibt der erreichte Druck auf einem Niveau stehen oder fällt wieder leicht ab, bis im Zeitabschnitt B zwischen den Zeitpunkten t3 und t4 ein weiteres Gas oder eine weitere Gasmischung zugeführt wird, die wiederum eine Druckerhöhung nach sich zieht. In einem dritten Zeitabschnitt C schliesslich kann der Druck zwischen den Zeitpunkten t5 und t6 ganz ausgeglichen werden, so dass anschliessend die Vakuumkammer 11 geöffnet und die Backwaren entnommen werden können.

Im Rahmen eines solchen Prozessablaufs ist es beispielsweise denkbar, dass im ersten Zeitabschnitt A Wasserdampf zugegeben wird, im zweiten Zeitabschnitt B eine Mischung aus Wasserdampf und CO2, und im dritten Zeitabschnitt C eine Mischung aus CO2 und reiner Luft.

### Bezugszeichenliste

- 10: Abkühlanlage
- 11: Vakuumkammer
- 11a: Tür
- 12: Tragebene
- 13: Backerzeugnis
- 14: Steuerung
- 15: Absaugleitung
- 16: Vakuumpumpe
- 17: Einlassleitung
- 18: Wasserdampfquelle
- 19: CO2-Quelle
- 20: Luftquelle
- 21: Druckaufnehmer
- 22: Temperaturaufnehmer
- A,B,C: Zeitabschnitt
- G1,G2,G3: Gas
- K1: Abpumpkurve
- K2: Druckausgleichskurve
- p: Druck
- t,t1-t6: Zeit, Zeitpunkt
- V1-V4: Ventil

## Patentansprüche

1. Verfahren zum Behandeln von Feuchtigkeit enthaltenden Backerzeugnissen (13), umfassend die folgenden Schritte:
a. Einbringen der zu behandelnden Backerzeugnisse (13) in eine Vakuumkammer (11);
b. Abkühlen der Backerzeugnisse (13) durch Abpumpen der Vakuumkammer (11) mittels einer Vakuumpumpe (16) entlang einer vorbestimmten Abpumpkurve (K1); und
c. anschliessender Druckausgleich in der Vakuumkammer (11) entlang einer vorbestimmten Druckausgleichskurve (K2) durch Einführen ausgewählter Gase (G1, G2, G3) in die Vakuumkammer (11);
**dadurch gekennzeichnet, dass**
d. zum Druckausgleich eine Mischung mehrerer verschiedener Gase (G1, G2, G3) eingesetzt wird.

2. Verfahren nach Anspruch 1, **dadurch gekennzeichnet, dass** die Mischung der Gase (G1, G2, G3) während des Druckausgleichs (K2) gezielt verändert wird.

3. Verfahren nach Anspruch 1, **dadurch gekennzeichnet, dass** wenigstens drei unterschiedliche Gase (G1, G2, G3) für den Druckausgleich verwendet werden.

4. Verfahren nach Anspruch 1, **dadurch gekennzeichnet, dass** die Gase (G1, G2, G3) aus entsprechenden Gasquellen (18, 19, 20) über eine gemeinsame Einlassleitung (17) in die Vakuumkammer (11) eingelassen werden.

5. Verfahren nach Anspruch 4, **dadurch gekennzeichnet, dass** die Gasmischung mittels einer Steuerung (14) gesteuert wird, welche auf den Zustrom der Gase (G1, G2, G3) aus den entsprechenden Gasquellen (18, 19, 20) in die gemeinsame Einlassleitung (17) einwirkt.

6. Verfahren nach Anspruch 5, **dadurch gekennzeichnet, dass** die Steuerung (14) über jeweils zwischen den Gasquellen (18, 19, 20) und der gemeinsamen Einlassleitung (17) angeordnete Ventile (V2, V3, V4) die Gasmischung steuert.

7. Verfahren nach Anspruch 3, **dadurch gekennzeichnet, dass** die Gase (G1, G2, G3) zumindest Wasserdampf, Luft und CO2 umfassen.

8. Verfahren nach Anspruch 4, **dadurch gekennzeichnet, dass** die Vakuumpumpe (16) über eine Absaugleitung (15) an die Vakuumkammer (11) angeschlossen ist, und dass die Gasmischung aus der gemeinsamen Einlassleitung (17) über die Absaugleitung (15) in die Vakuumkammer (11) eingelassen wird.

9. Abkühlanlage (10) zur Durchführung des Verfahrens nach einem der Ansprüche 1 bis 8, umfassend eine Vakuumkammer (11) mit einer daran angeschlossenen Vakuumpumpe (16) sowie Mitteln (17, 18, 19, 20; V2, V3, V4) zum Einlassen von verschiedenen Gasen (G1, G2, G3) zwecks Druckausgleich in die Vakuumkammer (11), **dadurch gekennzeichnet, dass** die Einlassmittel (17, 18, 19, 20; V2, V3, V4) eine für die verschiedenen Gase gemeinsame Einlassleitung (17) aufweisen.

10. Abkühlanlage nach Anspruch 9, **dadurch gekennzeichnet, dass** für die verschiedenen Gase (G1, G2, G3) separate Gasquellen (18, 19, 20) vorgesehen sind, die über von einer Steuerung (14) gesteuerte Ventile (V2, V3, V4) and die gemeinsame Einlassleitung (17)angeschlossen sind.

11. Abkühlanlage nach Anspruch 10, **dadurch gekennzeichnet, dass** wenigstens drei separate Gasquellen (18, 19, 20) für Wasserdampf, Luft und CO2 vorgesehen sind.

12. Abkühlanlage nach Anspruch 9, **dadurch gekennzeichnet, dass** die Vakuumpumpe (16) über eine Absaugleitung (15) und ein in der Absaugleitung (15) angeordnetes, von einer Steuerung (14) steuerbares Ventil (V1) an die Vakuumkammer (11) angeschlossen ist, und dass die gemeinsame Einlassleitung (17) zwischen dem Ventil (V1) und der Vakuumkammer (11) in die Absaugleitung (15) mündet.

13. Abkühlanlage nach Anspruch 12, **dadurch gekennzeichnet, dass** zwischen dem steuerbaren Ventil (V1) und der Vakuumkammer (11) ein Druckaufnehmer (21) zur Messung und Überwachung des Druckes in der Vakuumkammer (11) an der Absaugleitung (15) angeordnet ist.

14. Abkühlanlage nach Anspruch 11, **dadurch gekennzeichnet, dass** die Gasquelle für Wasserdampf (18) für die Erzeugung von Wasserdampf durch Verdampfen von Wasser ausgelegt ist.

15. Abkühlanlage nach Anspruch 11, **dadurch gekennzeichnet, dass** die Gasquelle für CO2 (19) als Gasspeicher ausgebildet ist.

16. Abkühlanlage nach Anspruch 11, **dadurch gekennzeichnet, dass** die Gasquelle für Luft (20) zur Ansaugung von Luft aus der Umgebung und Reinigung der angesaugten Luft ausgelegt ist.
